# EUROPÄISCHE PATENTANMELDUNG

(11) **EP 1 816 370 A2**
(43) Veröffentlichungstag der Anmeldung: **08.08.2007**
(21) Anmeldenummer: 06026115.3
(22) Anmeldetag: 16.12.2006
(51) Int. Cl.: F16F 1/32

(54) **Gefügter Federring**

(30) Priorität: 26.01.2006 DE 102006003976
(71) Anmelder: Muhr und Bender KG, 57439 Attendorn (DE)
(72) Erfinder: Hesselmann, Bernfried, Dr.-Ing., 57482 Wenden (DE); Roth, Ulrich, 57520 Neunkhausen (DE); Brenner, Harold, 57562 Herdorf (DE); Rinsdorf, Andreas, Dr.-Ing., 57258 Freudenberg (DE)
(74) Vertreter: Neumann, Ernst Dieter

(57) **Zusammenfassung**

Zu einem Ring gebogener am Umfang gefügter axial verformbarer Federring, wobei der Federring als Wellfeder 14₃ mit einer Mehrzahl von Wellenbergen 23 und Wellentälern 24 über dem Umfang oder als Tellerfeder mit Konusform und Zähnen an zumindest einer Umfangskante ausgebildet ist.

## Beschreibung

Die vorliegende Erfindung betrifft zu einem Ring gebogene am Umfang an einer Fügestelle gefügte axial verformbare Federringe. Federringe dieser Art sind als Axialspielausgleichselemente oder Axialrückstellelemente vielfältig im Einsatz, sowohl als Einzelelemente als auch in Paketen zu mehreren. Üblicherweise werden solche Federringe, die als Weilfedern oder als Tellerfedern ausgebildet sein können, aus Platinen- oder Bandmaterial ausgestanzt und zu Wellfedern oder Tellerfedern in weiteren Schritten umgeformt. Hierbei entsteht jeweils ein hoher Verschnittanteil, einerseits durch die kreisförmige Ausstanzung innerhalb des Ringes und andererseits durch den verbleibenden Rest der Platine oder des Bandes. Dies erhöht die Kosten durch den hohen Materialaufwand und die notwendige Logistik für das Recyceln des Verschnittanteils.

In der GB 1 248 473 wird beschrieben, wie Federringe in Form von Tellerfedern aus flachem Bandmaterial durch die Verwendung von Rollen-Rundbiegevorrichtungen zur Ringform gebogen werden können und anschließend im stumpfen Stoß oder im Formeingriff zum geschlossenen Ring gefügt werden können. Ein Umformen zur Konusform kann hiernach nach dem Fügen aus einem flachen Ring erfolgen; es kann jedoch auch bereits beim Rundbiegen des Bandmaterials zum Ring die Konusform aufgeprägt werden.

Aus der US 3 753 708 ist ebenfalls ein Verfahren zur Herstellung von Tellerfedern bekannt, bei dem aus flachem Bandmaterial Ringe geformt werden, die als ebene Ringe mit ihren Enden an der Trennstelle im Formschluß gefügt werden. Hierbei ist vorgesehen, im Anschluß an das Fügen die konische Form der Tellerfedern durch Warmumformung zu erzeugen.

Der vorliegenden Erfindung liegt die Aufgabe zugrunde, Federringe der eingangs genannten Art bereitzustellen, die bezüglich ihrer Federeigenschaften besser einzustellen sind und bezüglich ihrer Federkennlinien gezielter ausgewählt werden können, als die vorbeschriebenen Tellerfedern.

Eine erste Lösung hierfür besteht darin, daß der Federring als Wellfeder mit einer Mehrzahl von Wellenbergen und Wellentälern über dem Umfang ausgebildet ist. Bei Wahrung der Vorteile einer günstigen Herstellung sind hiermit Federringe darzustellen, die im allgemeinen bei gegebener Kennlinie geringere Materialstärken aufgrund einer besseren Materialausnutzung aufweisen können, als die bekannten Tellerfedern.

Nach einer ersten Ausführungsform ist vorgesehen, daß der Federring als Wellfeder mit Wellenbergen und Wellentälern jeweils untereinander unterschiedlicher Amplitude ausgebildet ist. Hiermit können Federringe mit abgeknickter zunehmend progressiver Kennlinie dargestellt werden, die das Anwendungsgebiet der erfindungsgemäßen Federringe erweitern.

In weiterer bevorzugter Ausführungsform ist vorgesehen, daß der Federring als Wellfeder mit konischer Grundform ausgebildet ist, der eine Wellenform überlagert ist. Hiermit sind bei gutem Ansprechverhalten etwas steilere Federkennlinien zu erzielen, ohne daß die Dicke des Materials erhöht werden muß.

Für die Nachbearbeitung und für die Belastung der Fügestelle ist es vorteilhaft, wenn diese auf einem Wellenberg oder in einem Wellental ausgebildet ist.

Nach einer zweiten erfindungsgemäßen Lösung ist vorgesehen, daß der Federring als Tellerfeder mit Schlitzen oder Zähnen an zumindest einem der inneren und äußeren Umfänge ausgebildet ist. Auch hiermit ist es möglich, bei Wahrung der Fertigungsvorteile Federringe bereitzustellen, die einen vergrößerten Hub bei gleichen Federkräften wie eine nichtgeschlitzte Tellerfeder aufbringen können.

In besonderer Ausführungsform ist vorgesehen, daß sich die Zähne radial vom Fuß zum Kopf hin oder vom Kopf zum Fuß hin verbreitern oder wie an sich Rechteckform oder üblich Sägezahnform haben.

Um die potentielle Schwächung durch eine Fügestelle auszugleichen, kann vorgesehen werden, daß der Ring an der Fügestelle und radial gegenüberliegend zur Fügestelle jeweils verbreitert ist. Durch diese zweifache Verbreiterung wird ein unsymmetrisches Verhalten des fertigen Federrings ausgeschlossen.

Besonders günstige Spannungsverteilungen am Federring lassen sich erzielen, wenn eine Querschnittsform mit von außen nach innen abnehmender Materialdicke gewählt wird.

Ein Verfahren zur Herstellung der Federringe der erstgenannten Art ist dadurch gekennzeichnet, daß der Federring nach dem Fügen zur Wellfeder verformt wird, wobei er insbesondere in einem Gesenk warm verformt werden kann. Ein erfindungsgemäßes Verfahren zur Herstellung von Federringen der zweiten erfindungsgemäßen Art sieht vor, daß der Federring nach dem Fügen am inneren oder äußeren Umfang mit Zähnen oder Schlitzen versehen wird, wobei diese insbesondere durch Stanzen oder Feinschneiden angebracht werden können. Sofern der Federring nicht bereits beim Rundbiegen zum Konus umgeformt ist, kann das Ausbilden der Konusform ebenfalls und insbesondere nach dem Fertigstellen des gefügten Ringes durch Warmverformen im Gesenk erfolgen.

Beide Verfahren können derart ausgeführt werden, daß der Federring an der Fügestelle geschweißt und vorzugsweise anschließend zum Entfernen eines Schweißwulstes geschliffen wird oder daß die Federringenden beim Abtrennen vom endlosen Band mit formschlüssigen Eingriffsmitteln versehen werden, die anschließlich miteinander in Eingriff gebracht und verprägt werden.

Querschnittsformen mit nicht-konstanter Materialdicke können durch Walzen des Bandmaterials vor dem Rundbiegen vorgesehen werden.

Bevorzugte Ausführungsbeispiele der Erfindung sind in den Zeichnungen dargestellt und werden nachstehend beschrieben.
- Figur 1: zeigt eine Vorrichtung zum Biegen von Federringen der erfindungsgemäßen Art aus Bandmaterial in Draufsicht;
- Figur 2: zeigt einen Teil eines erfindungsgemäßen gefügten Federringes
a) mit einer geschweißten Fügestelle
b) mit einer formschlüssig verpreßten Fügestelle;
- Figur 3: zeigt eine erfindungsgemäße Wellfeder
a) mit Wellentälern und Wellenbergen von untereinander gleicher Amplitude
b) mit Wellentälern und Wellenbergen von untereinander unterschiedlicher Amplitude;
- Figur 4: zeigt eine erfindungsgemäße Tellerfeder mit Innenzähnen
a) mit sich radial nach innen verbreiternden Zähnen
b) mit sich radial nach innen verjüngenden Zähnen;
- Figur 5: zeigt eine erfindungsgemäße Tellerfeder mit radial äußeren Zähnen
a) mit zwei radial gegenüberliegenden Verbreiterungen
b) mit über dem Umfang gleichmäßiger Verzahnung.

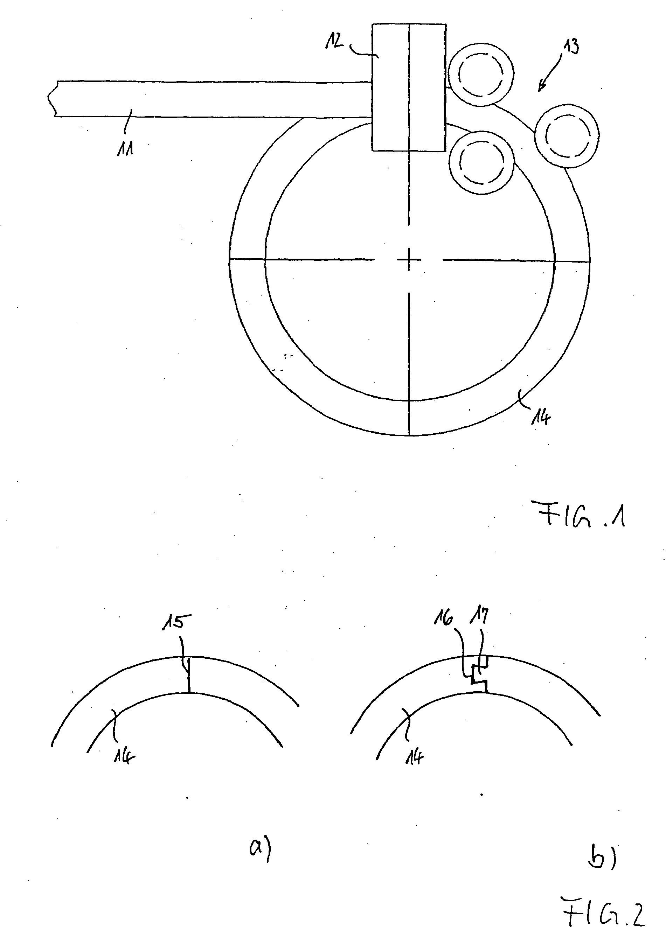

In Figur 1 ist ein gestrecktes flaches Band 11 gezeigt, das über eine Rollenführung 12 in eine Dreirollen-Biegeanordnung 13 einläuft, in der das Band zu einem Ring 14 gebogen wird. Sobald ein vollständiger Ring 14 von 360° entstanden ist, wird in einer Trennvorrichtung unterhalb der Rollenführung 12 ein vollständiger Ring 14 mit offener Trennstelle abgetrennt. Der gleiche Vorgang wiederholt sich bei kontinuierlichem Vorschub des Bandes 11 fortlaufend, wobei zwischen den einzelnen Ringabschnitten kein Verschnitt erfolgen muß. Vielmehr sollen die einzelnen Ringabschnitte mit aneinander angepaßten Fügestellen abgetrennt werden.

In der Dreirollenbiegeanordnung 13 kann im Normalfall ein ebener flacher Ring 14 gebildet werden, es ist jedoch auch möglich, bereits beim Biegen den Ring 14 zu einer Konusform zu verformen, wenn dieser später eine Tellerfeder bilden soll.

Das endlose Band 11 kann Spaltband aus ursprünglich breiterem Walzband sein oder beispielsweise auch flachgewalzter Draht. Das Dicken-/Breiten-Verhältnis soll im wesentlichen bereits dem des Fertigprodukts, also des gebogenen und gefügten Federringes entsprechen. Sofern der Federring mit einem vom Rechteckquerschnitt abweichenden Querschnitt ausgebildet werden soll, ist dieser vorzugsweise durch einen Walzvorgang am noch gerade gestreckten Bandmaterial hervorzubringen.

Die einzelnen abgetrennten Ringe 14 mit offener Trennstelle können anschließend auf unterschiedliche Weise an der Trennstelle gefügt werden.

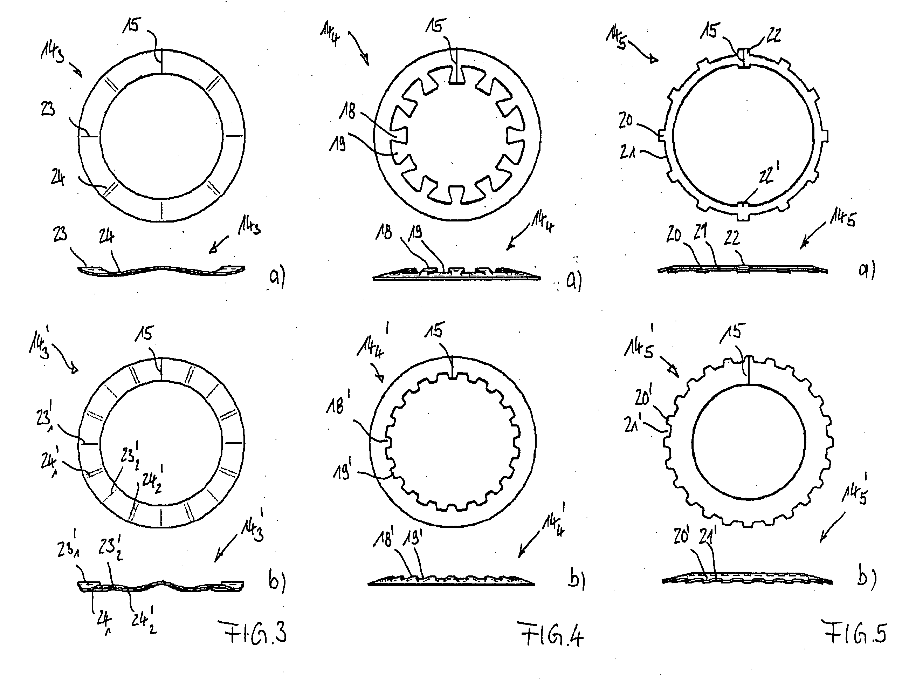

In Figur 2 sind zwei Beispiele für mögliche Fügearten des Rings 14 dargestellt. In Darstellung a) ist am Ring 14 als Fügestelle ein gerader Stoß 15 gezeigt, der durch Stoffschluß gefügt sein muß, insbesondere also durch Schweißung. Die bekannten und geeigneten Schweißmethoden sind anwendbar, insbesondere das Laserschweißen. Die Schweißstelle wird anschließend zur Entfernung von Schweißwülsten geschliffen.

In Darstellung b) ist am Ring 14 eine Fügestelle mit Formeingriff dargestellt, wobei an einem Ringende eine Ausnehmung 16 und am anderen Ringende eine entsprechende Zunge 17 vorgesehen ist, die insbesondere in Umfangsrichtung mit Hinterschnitt ausgebildet sind, so daß der gegenseitige Formeingriff bereits ohne weitere Maßnahmen Umfangskräfte aufnehmen kann. Durch ein Verprägen der Ringenden, das beispielsweise zugleich mit dem Umformen des Rings zur konischen Form erfolgen kann, wird die Fügestelle geschlossen. Auf ein zusätzliches Schweißen kann gegebenenfalls verzichtet werden.

In Figur 3 sind jeweils in Draufsicht und in einem Querschnitt zwei erfindungsgemäße Wellfedern 14₃, 14₃' gezeigt, an denen die Fügestelle als Stoß 15 erkennbar ist. Weiterhin sind durch einfache radiale Striche Wellenberge 23 und durch doppelte radiale Striche Wellentäler 24 angedeutet. In der Ausführung nach Darstellung a) sind die Amplituden jeweils der Wellenberge 23'₁, 23'₂ und der Wellentäler 24'₁, 24'₂ untereinander gleich, während in der Ausführung nach Darstellung b), über dem Umfang jeweils gleichmäßig wechselnd Wellenberge 23' und Wellentäler 24' mit unterschiedlichen Amplituden ausgebildet sind. Die Wellfedern entstehen durch Umformen ebener gefügter Federringe im Gesenk, insbesondere durch Warmumformung. Die Fügestelle liegt jeweils in einem Wellenberg und bildet einen geraden Stoß 15.

In Figur 4 sind jeweils in Draufsicht und in einem Querschnitt zwei Tellerfedern 14₄, 14₄' dargestellt, an denen die Fügestelle als gerader Stoß 15 erkennbar ist. Die Tellerfedern haben Konusform und weisen innere radiale Zähne 18 mit dazwischenliegenden Lücken 19 auf, wobei die Zähne 18 in Darstellung a) vom Fuß zum Kopf in der Breite hin zunehmen, während die Zähne 18' in Darstellung b) vom Fuß zum Kopf in der Breite abnehmen oder nahezu konstant sind.

In Figur 5 sind jeweils in Draufsicht und in einem Querschnitt zwei erfindungsgemäße Tellerfedern 14₅, 14₅' gezeigt, die ebenfalls Konusform haben und radial nach außen weisende Zähne 20 mit dazwischenliegenden Lücken 21 aufweisen. Die Fügestelle ist hier ebenfalls als gerader Stoß 15 erkennbar. In der Darstellung a) ist im Bereich der Fügestelle und radial gegenüberliegend zu dieser jeweils eine Ringverbreiterung 22, 22' vorgesehen, während in Darstellung b) die Ringform über dem Umfang gleichmäßig ist, d.h. Zähne 20' und Schlitze 21' von untereinander gleicher Form aufweist. Die Ringverbreiterung 22 dient der Verlängerung der Fügestelle 15, während die Ringverbreiterung 22' zur Vermeidung einer Unwucht vorgesehen ist.

### Bezugszeichenliste

- 11: Bandmaterial
- 12: Trennvorrichtung
- 13: Rollenanordnung
- 14: Ring
- 15: Fügestelle
- 16: Vorsprung
- 17: Ausnehmung
- 18: Zahn
- 19: Schlitz
- 20: Zahn
- 21: Schlitz
- 22: Verbreiterung
- 23: Wellenberg
- 24: Wellental

## Patentansprüche

1. Zu einem Ring gebogener am Umfang an einer Fügestelle (15) gefügter axial verformbarer Federring,
**dadurch gekennzeichnet,**
**daß** er als Wellfeder (14₃) mit einer Mehrzahl von Wellenbergen (23) und Wellentälern (24) über dem Umfang ausgebildet ist.

2. Federring nach Anspruch 1,
**dadurch gekennzeichnet,**
**daß** er als Wellfeder mit Wellenbergen (24) und Wellentälern (25) jeweils untereinander unterschiedlicher Amplitude ausgebildet ist.

3. Federring nach einem der Ansprüche 1 oder 2,
**dadurch gekennzeichnet,**
**daß** er mit konischer Grundform ausgebildet ist, der eine Wellenform überlagert ist.

4. Federring nach einem der Ansprüche 1 bis 3,
**dadurch gekennzeichnet,**
**daß** die Fügestelle (15) auf einem Wellenberg (24) oder in einem Wellental (25) angeordnet ist.

5. Zu einem Ring gebogener am Umfang an einer Fügestelle (15) gefügter axial verformbarer Federring,
**dadurch gekennzeichnet,**
**daß** er als Tellerfeder mit Zähnen (18; 20) oder Schlitzen (19; 21) an zumindest einer der inneren und äußeren Umfangskanten ausgebildet ist.

6. Federring nach Anspruch 5,
**dadurch gekennzeichnet,**
**daß** die Zähne Rechteckform oder Sägezahnform haben.

7. Federring nach Anspruch 5,
**dadurch gekennzeichnet,**
**daß** sich die Zähne (18) radial vom Fuß zum Kopf verbreitern.

8. Federring nach Anspruch 5,
**dadurch gekennzeichnet,**
**daß** sich die Zähne (20) radial vom Kopf zum Fuß verbreitern.

9. Federring nach einem der Ansprüche 1 bis 8,
**dadurch gekennzeichnet,**
**daß** der Ring an der Fügestelle (15) und radial gegenüberliegend zur Fügestelle jeweils eine Verbreiterung (22) aufweist.

10. Federring nach einem der Ansprüche 1 bis 9,
**dadurch gekennzeichnet,**
**daß** die Fügestelle (15) als Schweißnaht ausgebildet ist.

11. Federring nach einem der Ansprüche 1 bis 9,
**dadurch gekennzeichnet,**
**daß** die Fügestelle (15) als verpreßter Formeingriff ausgebildet ist.

12. Federring nach Anspruch 11,
**dadurch gekennzeichnet,**
**daß** der Formeingriff in Umfangsrichtung mit Hinterschnitt ausgebildet ist.

13. Verfahren zur Herstellung eines Federrings nach einem der Ansprüche 1 bis 12, bei dem aus gestrecktem Bandmaterial (11) ein Ring (14) gebogen und am Umfang gefügt wird,
**dadurch gekennzeichnet,**
**daß** der Ring (14) nach dem Fügen zur Wellfeder verformt wird.

14. Verfahren nach Anspruch 13,
**dadurch gekennzeichnet,**
**daß** der Ring (14) warm verformt wird.

15. Verfahren zur Herstellung eines Federrings nach einem der Ansprüche 1 bis 12, bei dem aus gestrecktem Bandmaterial (11) ein Ring (14) gebogen und am Umfang gefügt wird,
**dadurch gekennzeichnet,**
**daß** der Ring (14) nach dem Fügen mit radialen Zähnen (18; 20) oder radialen Schlitzen (19; 20) versehen wird.

16. Verfahren nach Anspruch 15,
**dadurch gekennzeichnet,**
**daß** der Ring (14) nach dem Fügen zum Konus verformt wird, insbesondere warm verformt wird.

17. Verfahren nach Anspruch 15,
**dadurch gekennzeichnet,**
**daß** der Ring (14) beim Rundbiegen zum Konus geformt wird.

18. Verfahren nach einem der Ansprüche 13 bis 17,
**dadurch gekennzeichnet,**
**daß** der Ring (14) an der Fügestelle (15) geschweißt wird.

19. Verfahren nach einem der Ansprüche 13 bis 17,
**dadurch gekennzeichnet,**
**daß** der Ring (14) an der Fügestelle (15) in formschlüssigem Eingriff verprägt wird.

20. Verfahren nach einem der Ansprüche 13 bis 19,
**dadurch gekennzeichnet,**
**daß** der Ring (14) nach dem Fügen und Umformen wärmebehandelt wird.
